# EUROPEAN PATENT APPLICATION

(11) **EP 3 117 718 A1**
(43) Date of publication of application: **18.01.2017**
(21) Application number: 16020267.7
(22) Date of filing: 13.07.2016
(51) Int. Cl.: A23L 2/58, A23L 3/02, A23L 33/10, B65D 1/16, A23L 5/42, A23L 33/105, A23L 33/16

(54) **AN ENERGY DRINK AND A METHOD FOR PREPARING AND PACKAGING IT**

(30) Priority: 13.07.2015 IT UB20152102
(71) Applicant: Cozzolino, Luigi, 80339 Munich (DE)
(72) Inventor: Cozzolino, Luigi, 80339 Munich (DE)
(74) Representative: Saporiti, Emilio Luigi

(57) **Abstract**

An energy drink for packaging in containers in general, preferably in tins or cans, comprises an energy drink mixture mainly consisting of water, a sugar syrup, citric acid with additional flavoring and coloring components, exclusively comprising a color mixture providing the energy drink with a sparkling golden pearl effect, the color mixture comprising inorganic and insoluble pigments or dyes of a mineral origin and a food compatible quality, including titanium dioxide, iron oxide and potassium-aluminium silicate.

## Description

### BACKGROUND OF THE INVENTION

The present invention relates to an energy drink and a method for preparing and conditioning or packaging said energy drink.

The so-called "energy drinks", generally constituted by an aqueous mixture, in which water is a main component, and including, in addition to water, either carbonized or not, several aromatic, flavoring and coloring ingredients, all of a quality approved for food use, are already known and widespread in the market.

In this connection it should be pointed out that the above mentioned energy drinks are differently defined in the global market: for example, in the European Union they require different minimum and maximum amounts of some ingredients or components.

Among the above mentioned ingredients, very important are the so-called coloring or dyeing agents, since to a commercial success of an energy drink, depending on several factors such as the taste, flavor, and reinvigorating power, or almost "exciting" power, as well as the less or more sparkling property thereof, will decidedly contribute also the drink color, and often an energy drink looks familiar and agreeable to a consumer just because of its color and sparking aspect.

### SUMMARY OF THE INVENTION

Thus, the aim of the present invention is to provide a novel energy drink, including, in addition to a novel and unique combination of substantially natural and licit components, providing the energy drink not only with optimum organoleptic and taste properties, but also with an aphrodisiac tone, also a pleasant and winning coloring, which could not be found in any of the energy drinks currently available on the market.

Within the scope of the above aim, a main object of the invention is to provide such an energy drink whose the ingredients are all substantially natural, compatible with the legal rules relating to the food and beverage products of nearly all the Countries and which, moreover, may be easily available in the market.

Another object of the present invention is to provide such an energy drink which may be conditioned and/or packaged in any type of commercial container or vessel, preferably in dedicated cans or the like, possibly improved by specifically designed decorations, for example of a fluorescent type, by using known packaging or conditioning methods and apparatus.

Yet another object of the present invention is to provide a very simple and reliable method for making and packaging the energy drink according to the invention, which method may be carried out on existing systems and equipments.

According to one aspect of the present invention, the above mentioned aim and objects, as well as yet other objects, which will become more apparent hereinafter, are achieved by an energy drink for packaging in containers in general, preferably in tins or cans, comprising an energy drink mixture mainly comprising water, a sugar syrup, citric acid, with additional flavoring and coloring components, characterized in that said coloring components exclusively comprise a color mixture providing said energy drink with a sparkling golden pearl effect, and that said color mixture comprises inorganic and insoluble pigments or dyes of a mineral origin and a food compatible quality, preferably including titanium dioxide, iron oxide and potassium-aluminium silicate.

According to another aspect of the invention, the above mentioned aim and objects are also achieved by a method for preparing and packaging an energy drink, substantially according to the enclosed method claims.

### DESCRIPTION OF THE PREFERRED EMBODIMENTS

Further characteristics and advantages of the energy drink according to the present invention will become more apparent hereinafter from the following detailed disclosure of a currently preferred embodiment of the invention, as well as of a method for preparing or making and packaging said energy drink, which will be also disclosed in a more detailed manner hereinafter.

In this connection, the Applicant submits that his invention has started from a novel idea of making a novel energy drink, designed for decidedly distinguishing from commercial energy drinks, to supply the energy drink users with a unique acquiring and drinking experience, also due to a packaging structure, preferably a packaging can, with fluorescent effects.

Thus, by starting from the above idea, after extensive studies and continuous and repeated tests in which have been tested a very large number of ingredients, all of a substantially natural type, and their mutual amounts in the aqueous mixture of the drink, the Applicant has specifically arrived at the formula of the energy drink according to the present invention, which has been found to be able to achieve all the above mentioned aim and objects, with surprising organoleptic and aphrodisiac properties of the drink, said drink having an optimum main texture and a very agreeable and surprising coloring, of a sparkling golden pearl type.

Actually, the drink according to the present invention is the first energy drink having the above mentioned sparkling golden pearl effect (which, according to a further aspect of the present invention, can be further enhanced by slightly stirring the drink can in a closed condition of the latter) and being a so-called "premium" energy drink, suggesting and imposing to a consumer a real selection of his/her lifestyle.

According to the present invention, the ingredient providing the energy drink according to the present invention with its sparkling or shining golden pearl tone is Candurin^{®}, a product made and marketed for example by the company MERCK KgaA, which is a main German/American pharmacologic company and which, while indicating in its marketing documents that Candurin^{®} is a pearl effect dye or color of a substantially natural type for foods and beverages or drinks in general, neither discloses nor suggests a possible use of the same as a coloring mixture in an energy drink having a composition analogous to that of the Applicant's energy drink.

In this connection, the Applicant believes, as a result of the above mentioned extensive studies carried out thereby, that it is just a synergistic combination of the mentioned Candurin^{®} with all the further ingredients of the drink or beverage which will be disclosed in a more detailed manner here below, in the mutual amounts also disclosed here below, and mainly of the aphrodisiac/herbal extracts included in the inventive drink, which has allowed to achieve the novel and inventive formulation thereof, in an unbreakable bond with its novel shining golden pearl effect.

As above mentioned, the so-called "energy" drinks are differently defined in the global market, even in the European Union, and accordingly they require different minimum/maximum amounts of several ingredients.

The main components of the energy drink according to the present invention comprise (in addition to those which will be disclosed hereinafter), dissolved in an aqueous solution of the energy drink, caffeine, preferably in a volume range from 0.0 to 0.032%; taurine, preferably in a volume range from 0.0 to 0.4%; and inositol, preferably in a volume range from 0.0 to 0.02%.

Here below is shown a table disclosing the rates of the ingredients preferably included in a preferred embodiment of the energy drink according to the present invention.

It should be pointed out that all the number values related to the components or ingredients of the energy drink according to the present invention must be considered as preceded by the word "about".

Candurin^{®}, which provides the above mentioned shining or sparkling golden pearl effects, contains, as shown in the enclosed table, the food coloring or dye materials potassium-aluminium silicate (mica E555) (0.03975% by weight); titanium dioxide (0.007% by weight) and iron oxide (0.00325% by weight), which coloring materials are classified as mineral-natural or identical to nature.

Titanium dioxide and iron oxide, which are of a type allowed for food products, are disclosed under E171 (titanium dioxide) and E172 (iron oxide).

Mica E555 operates as a support material for all the pearl effect coloring substances such as Candurin^{®}.

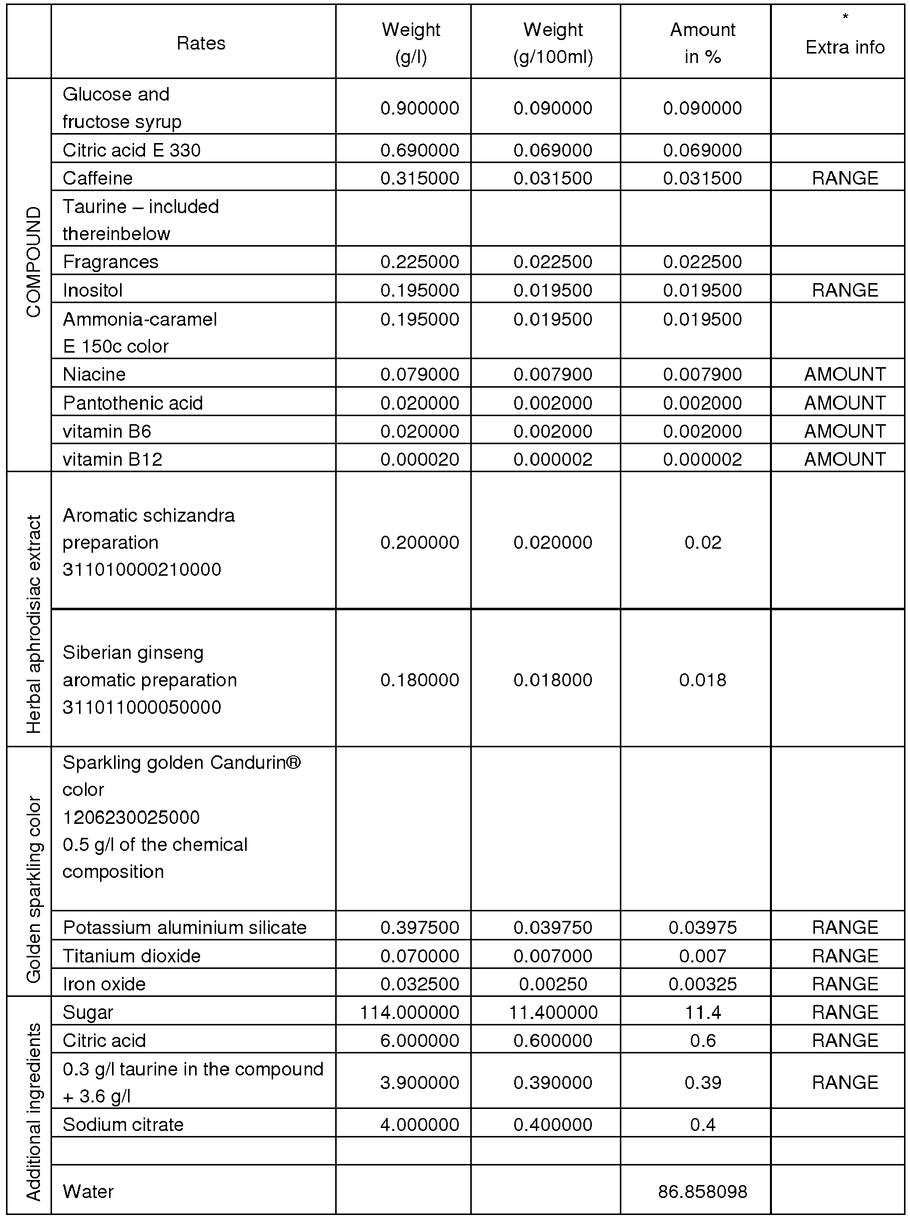

The invention also relates to a method for preparing and packaging in containers, preferably cans, the energy drink with a golden pearl coloring effect, according to the present invention, the method comprising at least the steps of:
a) providing a preset drinking water amount; b) pre-heating said water to a preset temperature; c) dissolving in said pre-heated water respective preset amounts of sugars and citric acid, thereby providing an elementary or starting syrup; d) pasteurizing said elementary syrup at a preset pasteurizing temperature for a preset pasteurizing time; e) adding to said elementary syrup preset amounts of auxiliary components, including a mixture of coloring agents consisting of inorganic insoluble pigments of a mineral origin and a food compatible quality and including titanium dioxide, iron oxide and potassium-aluminium silicate thereby providing an end or final syrup; f) testing and checking at least the taste, "brix" index and acidity of said end or final syrup; g) supplying said end or final syrup to a mixer and mixing therein said final syrup with processed carbonated water, to provide a carbonated drink; h) delivering said carbonated drink to filling means for filling said containers, preferably tins or a cans, and filling said tins or cans with said carbonated drink; i) tightly closing the filled tins or cans and pasteurizing the filled tins or cans in a pasteurizing device, preferably of a tunnel type; I) codifying the tightly closed tins or cans and applying, preferably on a bottom of each said closed tin or can, a respective expiry date; m) checking the filling level of each said codified tin; n) packaging preset assemblies of said tins or cans in respective packaging boxes and conveying said tin filled packaging boxes to a storing place.

In said step b) of the method according to the present invention, said water is pre-heated preferably to a temperature from 60°C to 80°C.

In said step d) of the method according to the present invention said elementary syrup is pasteurized at a temperature from preferably 80°C to 85°C and for a pasteurizing time of preferably 30 minutes.

In said step e) of the method according to the present invention, after having added all said auxiliary ingredients, said syrup is stirred for a stirring time preferably of half an hour.

Although the energy drink according to the present invention and its making method have been hereinabove disclosed with reference to a preferred embodiment thereof, it should be apparent that the disclosed embodiment is susceptible to several modifications and variations, all coming within the scope of the invention.

## Claims

1. An energy drink for packaging in containers in general, preferably in tins or cans, comprising an energy drink mixture mainly consisting of water, a sugar syrup, citric acid with additional flavoring and coloring components, **characterized in that** said coloring components exclusively comprise a color mixture providing said energy drink with a sparkling golden pearl effect and that said color mixture comprise inorganic and insoluble pigments or dyes of a mineral origin and a food compatible quality, including titanium dioxide, iron oxide and potassium-aluminium silicate.

2. An energy drink, according to claim 1, **characterized in that** said color or dye mixture providing said drink with said sparking golden pearl effect is known in the market under the trademark Candurin^{®} of the German company MERCK KgaA.

3. An energy drink, according to claim 1, **characterized in that** said energy drink comprises a water rate of substantially 86%, a caffeine rate from 0.0 to 0.032%, preferably 0.0315%, a taurine rate from 0.0 to 0.4% and an inositol rate from 0.0 to 0.02%, preferably 0.0195%.

4. An energy drink, according to claim 1, **characterized in that** said energy drink comprises, in a synergistic combination, the components listed below, substantially in the indicated amounts:

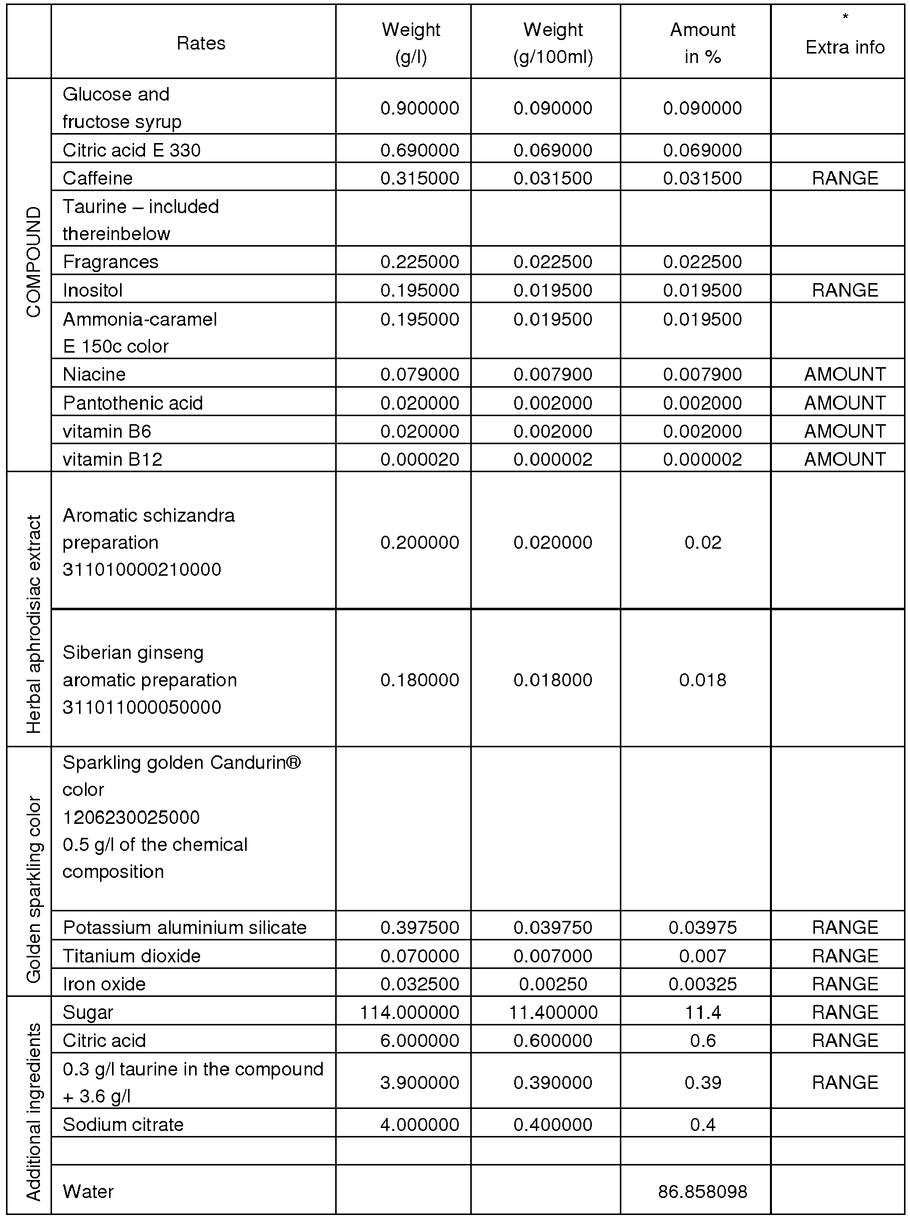

5. A method for preparing and packaging in containers, preferably tins or cans, an energy drink with a sparkling golden pearl effect, according to claim 1,
**characterized in that** said method comprises at least the steps of:
a) providing a preset drinking water amount;
b) pre-heating said water to a preset temperature;
c) dissolving in said pre-heated water respective preset amounts of sugars, preferably glucose and fructose, and citric acid, thereby providing an elementary starting syrup;
d) pasteurizing said elementary syrup at a preset pasteurizing temperature for a preset pasteurizing time;
e) adding to said elementary syrup preset amounts of auxiliary components, including a mixture of coloring agents consisting of inorganic and insoluble pigments of a mineral origin and a food compatible quality and including titanium dioxide, iron oxides and potassium-aluminium silicate thereby providing an end or final syrup;
f) testing and checking at least the taste, "brix" index and acidity of said end or final syrup;
g) supplying said end or final syrup to a mixer and mixing therein said end or final syrup with processed carbonated water, to provide a carbonated drink;
h) delivering said carbonated drink to filling means for filling said containers, preferably tins or a cans, and filling said tins or cans with said carbonated drink;
i) tightly closing the filled tins or cans and pasteurizing the filled tins or cans in a pasteurizing device, preferably of a tunnel type;
l) codifying the tightly closed tins or cans and applying, preferably on a bottom of each said closed tin or can, a respective expiry date;
m) checking the filling level of each said codified tin or can;
n) packaging preset assemblies of said tins or cans in respective packaging boxes and conveying said tin filled packaging boxes to a storing place.

6. A method, according to claim 5, **characterized in that** in said step b) said water is pre-heated preferably to a temperature from 60°C to 80°C.

7. A method, according to claim 5, **characterized in that** in said step d) said elementary syrup is pasteurized at a temperature from preferably 80°C to 85°C and for a pasteurizing time of preferably 30 minutes.

8. A method, according to claim 5, **characterized in that** after said pasteurizing step d) said elementary or starting syrup is filtered and fed to a respective holding tank.

9. A method, according to claim 5, **characterized in that** in said step e), after having added all said auxiliary ingredients, said syrup is stirred for a stirring time of preferably half an hour.

10. A tin or can, preferably with fluorescent decorative effects, for packaging the energy drink, according to claims 1 to 4, and prepared by a method according to claims 5 to 9.
